# EUROPÄISCHE PATENTANMELDUNG

(11) **EP 2 774 666 A1**
(43) Veröffentlichungstag der Anmeldung: **10.09.2014**
(21) Anmeldenummer: 14170983.2
(22) Anmeldetag: 05.02.2010
(51) Int. Cl.: B01D 1/22, B01D 19/00, B29C 47/00, C08C 1/12, C08C 2/02, C08C 3/02, C08F 6/00, C08F 6/10, C08F 6/12, C08F 6/16, C08F 6/20, C08F 6/28, C08G 85/00, C08C 1/02, C08C 2/00, B01D 1/14, B29C 47/10, B29C 47/36, B29C 47/76

(54) **Steuerung eines Mischkneterns**

(30) Priorität: 05.02.2009 DE 102009007641; 05.02.2009 DE 102009007644; 05.02.2009 DE 102009007643; 05.02.2009 DE 102009007621; 05.02.2009 DE 102009007642; 05.02.2009 DE 102009007640
(62) Teilanmeldung aus: 10708702.5
(71) Anmelder: LIST Holding AG, 4422 Arisdorf (CH)
(72) Erfinder: FLEURY, Pierre-Alain, 4433 Ramlinsburg (CH); KUNZ, Alfred, 4132 Muttenz (CH); Witte, Dr., Daniel, 79639 Grenzach-Wyhlen (DE); DIENER, Andreas, 09603 Grossschirma (DE); ISENSCHMID, Thomas, 4312 Magden (CH); SCHWICK, Alain, 4123 Allschwil (CH); STEINER, Manuel, 4054 Basel (CH)
(74) Vertreter: Dres Weiss & Arat

(57) **Zusammenfassung**

Bei einem Verfahren zur kontinuierlichen Behandlung eines zähviskosen, pastösen Produktes in einem Mischkneter mit einem durchgängigen Produkt- und Gasraum soll die Temperatur des Produktes am Austrag über die Drehzahl des Mischkneters bei gegebener Produktzufuhr geregelt werden.

## Beschreibung

Die Erfindung betrifft ein Verfahren zur kontinuierlichen Behandlung eines zähviskosen, pastösen Produktes in einem Mischkneter mit einem durchgängigen Produkt- und Gasraum.

### STAND DER TECHNIK

Die industrielle Herstellung von Stoffgemischen, insbesondere jedoch keineswegs einschränkend die Herstellung von Polymeren, insbesondere von homo- und co-polymeren Elastomeren, erfolgt durch Polymerisationsreaktionen im sogenannten Solution-Polymerisationsverfahren, wobei für eine bessere Durchmischung durch die Verwendung von Lösungsmittel die Viskosität im Rührkesselreaktor abgesenkt wird. Aus der dabei entstehenden Polymerlösung muss das Lösemittel abgetrennt werden. Die Entfernung dieses Verdünnungsmittels erfolgt heute im Koagulation- und Strippverfahren, wobei grosse Mengen Energie in Form von Strippdampf (wet process) eingesetzt werden. Nach diesem Schritt muss das Polymer durch eine mechanothermische Trocknung aufwendig vom Strippmedium abgetrennt werden. Die Entfernung des Strippmediums erfolgt zweistufig über ein mechanisches Abpressen und atmosphärisches Trocknen. Während dieser Prozesse wird sehr viel Energie in Form von Wasserdampf und sehr viel Waschwasser benötigt, was zu hohen Abwassermengen und, aufgrund der grossen offenen Aggregate, zu hohen Emissionen führt. Parallel dazu muss das Strippmittel und das Lösungsmittel wiederum sehr aufwendig voneinander getrennt werden. Das bestehende Verfahren ist damit eine energetisch sehr ineffiziente, eine von hohen Emissions- und Investitionskosten gekennzeichnete uneffektive Technologie. Die bestehende Technologie ist bekannt, die Risiken sind gering und die Katalysatorsysteme sowie die Verarbeitung sind auf diese Technologie zugeschnitten.

In der US 3 683 511 A wird eine Methode beschrieben, die speziell für die Entgasung polybutadienhaltiger Polymerlösungen und Lösungen, wo im Polymer mehr als 50% Butadien einpolymerisiert ist, erarbeitet wurde. Erfindungsgemäss wird die Entfernung des Lösungsmittels dadurch gelöst, dass in den Extruder Wasser zugegeben wird.

Ähnliche Lösungen werden auch in der US 4 909 898 A und der EP 0 262 594 B1 vorgestellt. In diesen Veröffentlichungen wird die Polymerlösung in die Mixer-/Kneaderzone gebracht und das Lösungsmittel bei der Temperatur verdampft, bei der die Oberfläche der Wärmeübergangsfläche eine höhere Temperatur hat als die Siedetemperatur des am niedrigst siedenden Lösungsmittels. Dabei wird ebenfalls eine mit dem Polymeren unmischbare Flüssigkeit zugegeben, in diesem Fall Wasser.

In der US 6 150 498 A und der EP 0 910 588 B1 wird ein Verfahren zur Entgasung von EPDM und ähnlichen Polymeren, wie Polyethylen, Polypropylen, Ethylenpropylengummi und Polystyrol mit einem thermischen Trockner vorgestellt. Dabei besteht der thermische Trockner aus einem horizontalen Mantel und einer rotierenden Welle innerhalb des Mantels, Scheibenelemente, die auf der Welle angeordnet sind und stationäre Gegenzapfen aufweisen, die auf der Innenseite des Mantels angebracht sind. Die Anwendung einer solchen Technologie ist auf Polymerlösungen, die grössere Mengen an Dissipationsenergie absorbieren können, beschränkt, da sich das Polymer sonst zu sehr erhitzt oder die Entgasungsleistung unzureichend ist.

Neben den energetischen Aspekten und den hohen Emissionen sind vor allem der hohe Aufwand für die Wasserabtrennung für die modernen wasserempfindlichen anionische Polymerisationsverfahren und die Aufarbeitung von extrem temperaturempfindlichen Produkten eine Triebkraft zur Modernisierung des Verfahrens.

### Aufgabe

Aufgabe der vorliegenden Erfindung ist es, den Energie- bzw. Wasserdampf- und den Wasserverbrauch zu reduzieren, um die Energiebilanz des Prozesses zu verbessern sowie die Effizienz neuer Verfahren zu erhöhen. Parallel dazu können temperaturempfindliche Stoffgemische hergestellt werden, die mit der bestehenden Technologie nicht bzw. nur unter Zugabe von speziellen Antioxydanten herstellbar sind. Das neue Aufbereitungsverfahren (dry process) hat das Ziel, den Prozess energieeffizienter, umweltfreundlicher und flexibler zu machen.

### Lösung der Aufgabe

Zur Lösung der Aufgabe führt, dass die Temperatur des Produktes am Austrag über die Drehzahl des Mischkneters bei gegebener Produktzufuhr geregelt wird.

Es handelt sich insbesondere und bevorzugt um ein Verfahren und eine Vorrichtung zur kontinuierlichen Behandlung einer Polymerlösung durch direkte Verdampfung von Lösungsmittel, Monomer, Katalysator-, Initiator- oder Reaktionsresten aus der Polymerisation von elastomerhaltigen Polymerlösungen in Mischknetern mit einer oder zwei Rührwellen. Dabei wird eine niedrigviskose Polymerlösung erstens in einer Verdampfungsschleife, zweitens in einem Verdampfungsmischkneter und drittens in einem Entgasungskneter behandelt. Dieses Verfahren eignet sich speziell für temperaturempfindliche Polymere, die bis maximal 160°C behandelt werden dürfen. Es soll aber ausdrücklich festgehalten werden, dass sich das erfindungsgemässe Verfahren auf die entsprechende Behandlung von anderen Stoffgemischen bezieht, gleichgültig ob es sich um Lösungen, Suspensionen oder Emulsionen handelt. Alle entsprechenden Stoffgemische sollen von der vorliegenden Erfindung umfasst sein.

Bevorzugt wird, ein dünnflüssiges Stoffgemisch zuerst in einer Verdampfungsschleife mit Kontaktwärme vorkonzentriert und dann als viskose Lösung in einen Verdampfungsmischkneter so zudosiert, dass die Viskosität in diesem Aggregat ausreicht, um mehrheitlich über Friktion die Verdampfungsenergie bereit zu stellen, um über 90% des der Lösung zugeführten Fluids (z.B. Lösungsmittel) zu verdampfen. Die eingetragene thermische und mechanische Energie wird dabei direkt zur Verdampfung des Lösungsmittels genutzt, wobei das Druckniveau so eingestellt wird, dass die maximale Stoffgemischtemperatur aufgrund der Verdampfungskühlung des Lösungsmittels nicht überschritten wird.

Aus diesem Verdampfungskneter wird ein Stoffgemisch mit ca. 10% Restfeuchte (z.B. Lösungsmittel) ausgetragen und in einen Entgasungskneter dosiert, um dort auf die endgültig gewünschte Restfeuchte (z.B. Restlösungsmittelkonzentration) eingedampft zu werden.

Zur Verbesserung des Entgasungsprozesses werden kleine Mengen eines Fluids (z.B. Wasser) in den Entgasungskneter dosiert, die durch das Verdampfen auf der Oberfläche des Stoffgemisches die für eine Oberflächenerneuerung eingetragene mechanische Energie wieder abführt, so dass die Stoffgemischtemperatur exakt eingestellt werden kann, z.B. um Überhitzung und thermische Schädigung zu vermeiden.

Parallel dazu hilft der entstehende Fluiddampf (z.B. Wasserdampf) im Brüdenraum als Strippmittel Partialdruck senkend und kann, im Gegensatz zur kontaminierten heissen Trocknungsluft (hot air) des bestehenden Prozesses, komplett mit dem Lösungsmittel kondensiert werden.

Das gefundene Verfahren eignet sich insbesondere für elastomerhaltige und plastomerhaltige Homo-Polymerlösungen, Polymerlösungsgemische oder Copolymerlösungen aus der Lösungspolymerisation, insbesondere für hoch temperaturempfindliche und aber auch weniger empfindliche Stoffgemische, wie zum Beispiel für die direkte Eindampfung von butadien- und butylstämmigen Elastomeren, wie BR, SBR, SBS, SIS, SBM HBR, NBR oder auch EPDM-stämmigen Elastomeren sowie zur Eindampfung von Copolymerlösungen, die direkt co-polymerisiert werden oder aus zwei Polymerlösungen vor der direkten Eindampfung gemischt werden, wie z.B. Polymerlösungen aus gemischten SBS und SBR Lösungen, also schwierig mischbaren Elastomeren und Plastomeren, und auch für Polyisopren- oder Polyethylenpropylenlösungen oder Halobutyl-Rubber.

Bei den Polymerlösungen kann es sich um nach der Lösungsmittelpolymerisation in beliebigem Verhältnis vermischte Polymerlösungen handeln. Bei mindestens einer Polymerlösung handelt es sich um eine Lösung eines elastomerhaltigen Polymers.

Bei den abzutrennenden flüchtigen Bestandteilen handelt es sich um Lösemittel oder Lösemittelsysteme bzw. nicht umgesetzte Monomere, Katalysatoren-, Initiatoren-, Stabilisatoren-, Antioxydationsmittel- oder Polymerisationsresten. Aufgrund des geschlossenen Systems des dry process können über 98% des Lösungsmittels im Kreislauf ohne aufwendige Wasserabtrennung zurückgeführt und die Lösemittelemissionen bzw. die belastete Abwasser- und Abgasmenge enorm reduziert werden.

Entgegen dem genannten Stand der Technik macht es die Erfindung möglich, mittels Extrudern oder Knetmaschinen elastomerhaltige Polymerlösungen, speziell reine Polybutadienlösungen, direkt und ohne weitere Hilfskomponenten, auf beliebige Restlösungsmittelgehalte zu entgasen.

Die Mischkneter, mit denen die hier vorliegende Erfindung getestet wurde, sind ein- oder zweiwellig, gleich- oder gegenläufig, und werden in den Patenten DE 2 349 106 C, EP 0 517 068 A1, EP 0 853 491, DE 101 50 900 C1 (PTC/EP 02/11578; WO 03/035235A1) detailliert beschrieben. Sie werden bis zu einer Grösse von 25'000 Liter freiem Volumen hergestellt und können für die Direktverdampfung eingesetzt werden. Es handelt sich bevorzugt um grossvolumige, selbstreinigende, ein- oder mehrwellige horizontale Mischkneter, die gehäuseseitig (vorzugsweise mit Doppelmantel) und/oder kneterwellenseitig (unabhängig) temperierbar sind.

Die Unteransprüche beschreiben vorteilhafte Ausgestaltungen des erfindungsgemässen Verfahrens.

Bevorzugt findet vor der Hauptverdampfung eine Vorkonzentration des Stoffgemisches. Hierdurch kann beispielsweise ein dünnflüssiges Stoffgemisch mit 5 bis 50% Stoffgehalt durch eine thermische Behandlung, vorzugsweise, aber nicht zwingend, in einer Verdampfungsrohrschleife, bis auf ein noch pumpfähiges höher konzentriertes Stoffgemisch von 20 bis 80% aufkonzentriert werden.

Dieses aufkonzentrierte Stoffgemisch wird in einen der Vorkonzentration nachgeschalteten Verdampfungskneter zur Hauptverdampfung dosiert und auf einen Restgehalt an flüchtigen Komponenten von kleiner 20%, vorzugsweise von 2 bis 12% eingedampft. Eindosiert wird an einer oder mehreren Stellen und bevorzugt gleichzeitig. Die Dosiermenge des Stoffgemisches wird jeweils durch eine Temperatur gesteuert.

Durch die Verteilung des aufkonzentrierten Stoffgemisches im Verdampfungskneter entsteht ein homogenes hochviskoses Stoffgemisch, in das grosse Mengen an mechanischer Dissipationsenergie durch Friktion eingetragen werden kann. Ferner wird durch die Verteilung des aufkonzentrierten Stoffgemisches im Verdampfungskneter die Schaumbildung unterdrückt und sehr hohe spezifische Kontaktwärme pro Heizflächeneinheit erreicht.

Die verdampften flüchtigen Bestandteile, Brüden genannt, werden über einen Brüdendom aus dem Verdampfungskneter abgezogen. Sie beruhigen sich im Brüdendom. Die kondensierbaren Komponenten schlagen sich in einem über ein Brüdenrohr verbundenen Kondensator, vorzugsweise einem Spraykondensator oder einem luftgekühlten Kondensator, fast vollständig nieder und werden aus dem geschlossenen System ausgeschleust. Die nicht kondensierbaren Komponenten werden einer technologischen Weiterbehandlung zugeführt. Einen ähnlichen Brüdenabzug besitzt im übrigen auch der später beschriebene Entgasungskneter.

Falls gewünscht, kann der technologische Weg der Brüden zumindest teilweise mit antihaftbeschichtetem Material ausgekleidet werden, um ein Anhaften bzw. das Anbacken von Stoffgemisch zu vermeiden. Desweiteren kann der technologische Weg der Brüden zumindest teilweise gekühlt werden, um eine Rückkondensation zu erreichen und damit den Brüdenweg sauber zu halten. Zusätzlich oder allein kann der technologische Weg der Brüden mit einer Düse und wahlweise pulsierenden oder stationärem Waschen sauber gehalten werden.

Ein Prozessdruck in dem Verdampfungskneter wird so gewählt, dass die Verdampfungskühlung der flüchtigen Bestandteile eine Schädigung des Stoffgemisches durch Überhitzung verhindert, vorzugsweise liegt er zwischen 10 und 2000 mbar abs. Auch eine Heiztemperatur des Verdampfungskneters und die maximale Stoffgemischtemperatur soll zu keinem Prozesszeitpunkt die Schädigungstemperatur erreichen oder überschreiten und vorzugsweise zwischen 60°C und 160°C eingestellt werden. Dabei sollen eine Heiztemperatur des Verdampfungskneters und die max. Stoffgemischtemperatur nur kontrolliert die Schädigungstemperatur des Produktes erreichen oder überschreiten.

Die Verdampfung von flüchtigen Bestandteilen im Verdampfungskneter wird bevorzugt über die Drehzahl der Kneterwelle in Abhängigkeit von der Austrittstemperatur geregelt wird. Bei gleichbleibender Drehzahl der Kneterwellen wird die in den Verdampfungskneter dosierte Stoffgemischmenge an die jeweilige Verdampfungsleistung angepasst und damit in Abhängigkeit von der Produkttemperatur geregelt wird. Eine Erhöhung des Durchsatzes durch die Erhöhung der Drehzahl der Kneterwellen und dem dadurch höheren Dissipationsenergieeintrag folgende höhere Verdampfungsleistung macht sich in einer steigenden Temperatur bemerkbar, und deshalb erfolgt aufgrund der Verknüpfung von Temperatur und Dosiermenge eine Durchsatzerhöhung und ebenso umgekehrt bei Reduzierung der Drehzahl eine Durchsatzreduzierung.

Das im Verdampfungskneter aufkonzentrierte Stoffgemisch wird über einen Austrag bevorzugt kontinuierlich ausgetragen. Dabei kann es sich um eine ein- oder mehrwellige Schnecke handeln, aber auch andere Austrageinrichtungen sollen von der Erfindung umfasst sein.

Das aus dem Verdampfungskneter ausgetragene Stoffgemisch soll durch einen Druckaufbau, vorzugsweise durch eine Zahnradpumpe, auf einen Druck von mehr als 1 bar gebracht werden. Ferner soll die Massebilanz in dem Mischkneter mittels der Drehzahl der Zahnradpumpe konstant gehalten werden, also der Austrag aus dem Kneter und die Konstanz des Massestromes getrennt werden, wobei die Zahnradpumpe für die Konstanz der Massebilanz verantwortlich ist. Ferner soll der bevorzugt direkt in dem Mischkneter integrierte Austrag soviel Druck aufbauen, das die Zahnradpumpe ausreichend Vordruck hat und annähernd gleichmässig gefüllt ist, sowie dieser Zusammenhang geregelt wird, aber nicht zwingend geregelt werden muss.

In das unter Druck stehende Stoffgemisch wird bevorzugt ein flüssiges oder gasförmiges Additiv eindosiert. Dies geschieht in einem Mischrohr oder einem statischen oder dynamischen Mischer und möglichst homogen.

Das flüssige Additiv hat dabei bevorzugt eine frei wählbare Temperatur, vorzugsweise zwischen 10°C und 160°C, und ist vorzugsweise Wasser, Alkohol oder ein verflüssigtes Gas, vorzugsweise Kohlendioxid oder Butan.

Ein gasförmiges Additiv hat ebenfalls eine frei wählbare Temperatur, vorzugsweise zwischen 10°C und 160°C, und ist vorzugsweise Kohlendioxid, Stickstoff oder Luft.

Das unter Druck stehende und gegebenenfalls mit Additiven homogen vermischte Stoffgemisch wird durch eine Düsenplatte in einen nachgeschalteten Entgasungskneter zur Entgasung entspannt, wobei durch eine schlagartige Verdampfung der flüchtigen Bestandteile und der Additive eine Erhöhung der Partikeloberfläche stattfindet, analog dem Popkorneffekt. Die Düsenform, die Düsenanordnung, die Lochzahl und der Abstand der Löcher in der Düsenplatte sind optimal auf die Verkürzung des Diffusionsweges, die Möglichkeit des freien Gasabtransportes und die Verlängerung der Diffusionszeit abgestimmt sind.

Das Stoffgemisch im Entgasungskneter unterliegt bevorzugt einer Pfropfenströmung und einer stetigen aktiven Oberflächenerneuerung, wobei mechanische Dissipationsenergie in das Stoffgemisch absorbiert wird.

Die Stoffgemischstemperatur wird während der Entgasung im Entgasungskneter durch die Zugabe von leicht verdampfbaren oder gasförmigen, in dem Stoffgemisch nicht löslichen Additiven an einer oder mehreren Stellen im Entgasungskneter unterhalb der Schädigungstemperatur für das Stoffgemisch gehalten. Die in den Entgasungskneter zugegebenen Additive sind zum Beispiel Wasser, Alkohole oder Gase.

Durch die Zugabe von leicht verdampfbaren Additive im Entgasungskneter wird auch durch Verdampfungskühlung die Stoffgemischstemperatur limitiert wird. Die Limitierung der Temperaturerhöhung des Stoffgemisches durch die mechanisch eingetragene Dissipationsenergie für die Oberflächenerneuerung wird über Temperaturmessinstrumente kontolliert und die entsprechend dosierte Additivmenge für die Verdampfungskühlung geregelt.

Der hold up im Entgasungskneter wird über die ausgetragene Masse geregelt, wodurch sich die mechanisch eingetragene Dissipationsenergie und die Verdampfungskühlung des Additivs nahezu ausgleichen und eine Überhitzung des Stoffgemisches verhindern.

Durch die Verdampfung der leicht verdampfbaren oder gasförmigen Additive wird der Partialdruck in der Gasphase der aus dem Stoffgemisch zu entfernenden flüchtigen Bestandteile deutlich abgesenkt, wodurch ein die Diffusion beschleunigender Strippeffekt entsteht.

Insgesamt wird der Gehalt an flüchtigen Bestandteilen in dem Stoffgemisch im Entgasungskneter unter die gewünschten Restgehalte von 0 bis 10.000 ppm, vorzugsweise 10 bis 1000 ppm, noch bevorzugter 10 bis 300 abgesenkt.

Die flüchtigen Bestandteile des Stoffgemisches sollen bevorzugt unter Zugabe von geringen Mengen von Additiven, die über die Länge des/r Mischkneter/s eindosiert werden, nahezu vollständig abgetrennt werden. Dabei wird die Menge an Zusatzstoffen (Additiven) so eingestellt, dass die Energiebilanz aus dissipierter Knetenergie, Kontaktheizung oder -kühlung durch Welle und Gehäuse des/r Mischkneter/s und der Verdampfungskühlung des Zusatzstoffes und anderer flüchtiger Bestandteile eine Temperatur ergeben, die eine effiziente Entfernung der unerwünschten flüchtigen Bestandteile aus einem pastösen Stoffgemisch gewährleistet.

Das Vermischen des Zusatzstoffes begünstigt auch das Entstehen von Keimen für Mikrobläschen in dem Stoffgemisch, welche die unerwünschten flüchtigen Bestandteile aufnehmen und z.B. durch eine drehende Welle an die Stoffgemischoberfläche transportiert werden, wodurch die Entgasungsleistung an unerwünschten flüchtigen Bestandteilen wesentlich begünstigt wird. Dabei kann der Druck in einem Gasraum des Kneters periodisch variiert werden, um die Kreation von Mikrobläschen in der Schmelze zusätzlich zu begünstigen und damit die Entgasungsleistung zusätzlich zu steigern.

Durch die Zugabe von geringen Mengen Additiven wird das Stoffgemisch chemisch nicht verändert, es treten keine anwendungstechnischen Schädigungen sowie Veränderung der Stoffgemischeigenschaften auf.

Die zugeführten Zusatzstoffe können gleichmässig über die Länge oder punktuell verteilt über das Stoffgemisch bzw. über die Länge des/r Mischkneter/s zudosiert werden.

Insgesamt erzeugt die Zugabe der Additive günstigere Produktverhalten insbesondere in Bezug auf Oberflächen, Viskosität od.dgl..

Der Prozessdruck wird so gewählt, dass die Verdampfungskühlung der flüchtigen Bestandteile und der zugegebenen verdampfbaren Additive eine Schädigung des Stoffgemisches durch Überhitzung verhindern. Der Bereich liegt bei 1 bis 10.000, vorzugsweise zwischen 10 und 2000 mbar abs. Die Heiztemperatur des Mischkneters und die maximale Stoffgemischtemperatur werden zu keinem Prozesszeitpunkt die Schädigungstemperatur erreichen oder überschreiten und zwischen - 100° bis 300°, vorzugsweise zwischen 60°C und 160°C eingestellt. Die Verweilzeit des Stoffgemisches in dem Verdampfungskneter und dem Entgasungskneter soll so kurz wie möglich sein, vorzugsweise 5 min bis maximal 2 Stunden je Apparat. Verdampfungskneter und der Entgasungskneter besitzen ein freies Volumen von 2 Liter bis 25000 Liter.

Das im Entgasungskneter aufkonzentrierte Stoffgemisch wird über einen Austrag kontinuierlich ausgetragen, wobei das aus dem Entgasungskneter ausgetragene, von den flüchtigen Bestandteilen befreite Stoffgemisch, nun als Masse bezeichnet, durch einen weiteren Druckaufbau, vorzugsweise durch eine Zahnradpumpe, auf einen Druck von mehr als 1 bar gebracht wird.

Danach wird die Masse durch eine Düsenplatte mit einer vorgeschalteten Schneidevorrichtung, vorzugsweise einem Granulator, in eine Form gebracht, die für die weitere Verarbeitung des Mass sinnvoll ist. Diese wird dann vorzugsweise, aber nicht zwingend einer Ballenpresse zugeführt.

Die technologische Anordnung der prozessrelevanten Elemente, die Konfiguration der Mischkneter und die Prozessparameter werden so gewählt, das eine Schaumbildung vermieden wird sowie, falls unerwünschter Schaum sich bildet, er mit geeigneten Mitteln reduziert resp. zerstört /eliminiert werden kann.

In allen technologischen Stufen sollen genügend Grenzflächen für einen optimalen Stoffübergang innerhalb des Stoffgemisches bzw. der Masse und dem Übergang der flüchtigen Bestandteile an die Gasphase geschaffen werden.

Die hohen Drehmomente, hohen Drehzahlen und hohen Leistungen für die in die Verdampfungsstufen einzutragende Dissipationsenergie erfolgt über ein spezielles Antriebskonzept er, bei dem ein frequenzgesteuerter Elektromotor einen sehr grossen Hydraulikmotor als Ölmengenlieferant, sozusagen als Pumpe, benutzt und diese grosse Ölmenge direkt zum Hydraulikmotor der Mischkneter geführt wird, ohne zusätzliche Mengenstromverstellung.

Ein Füllgrad im Mischkneter wird in Abhängigkeit vom Drehmoment des Mischkneters über die Austragsmenge, also die Drehzahl der Austragsvorrichtung oder die Eintragsmenge, also Reduzierung oder Erhöhung der eingetragenen Stoffgemischmenge, geregelt. Eine höhere Drehzahl im Mischkneter, vorzugsweise im Entgasungskneter, führt zu einer höheren Oberflächenerneuerung, die den Stoffübergang beschleunigt und die mechanisch eingetragene Dissipationsenergie erhöht, weshalb die Massentemperatur steigt und die entsprechend zuzugebende Additivmenge für die Verdampfungskühlung steigt, um das Elastomer nicht zu überhitzen bzw. zu schädigen, wobei gleichzeitig der Partialdruck des Additivs im Gasraum erhöht wird, damit der Partialdruck der zu entfernenden Komponenten reduziert wird, wodurch wiederum eine höhere Triebkraft für den Stoffübergang entsteht und der Entgasungseffekt der unerwünschten Bestandteile reduziert wird.

Desweiteren wird Schutz für ein Verfahren zur kontinuierlichen Behandlung von Polymerlösungen in einem Verdampfer und/oder Entgaser mit einem durchgängigen Produkt- und Gasraum begehrt, wobei zumindest ein Additiv zur Regelung der Produkttemperatur dosiert zugegeben wird, so dass die Temperatur stets unterhalb der Polymerschädigungstemperatur bleibt. Die Zugabe geschieht bevorzugt an mehreren Stellen bzw. das Produkt wird an mehreren Stellen im Produkt und Gasraum mit Additiv beaufschlagt wird. Als Additiv wird bevorzugt Wasser verwendet.

Über die Austragsvorrichtung wird bevorzugt ein Füllgrad so eingestellt, dass eine effiziente Oberflächenerneuerung zur Entgasung im Verdampfer und/oder Entgaser stattfindet. Dabei kann zur Ermittlung des Füllgrades das Drehmoment des Verdampfers und/oder Entgasers verwendet wird. Hinzu kann durch die Wahl der Drehzahl die Oberflächenerneuerung und damit der Restlösemittelgehalt eingestellt werden. Hierzu kann am Austrag des Mischkneters ein- oder mehrwelliges schneckenförmiges Austragsorgan und anschliessend eine Zahnradpumpe angeordnet sein. Ein bestimmter Füllgrad resp. das Drehmoment eines Mischelements wird durch Variieren der Drehzahl der Zahnradpumpe eingestellt. Dabei soll die Drehzahl des schneckenförmigen Austragsorgans so eingestellt werden, dass ein vorbestimmter Druck am Eintrag der Zahnradpumpe ansteht, so dass die Zahnradpumpe nahezu vollständig mit Produkt gefüllt ist.

Desweiteren besteht die Möglichkeit, dass ein bestimmter Füllgrad resp. das Drehmoment des Mischelements durch Variieren der Drehzahl bevorzugt der Zahnradpumpe, aber auch des schneckenförmigen Austragsorgans eingestellt wird.

Die Drehzahl der Zahnradpumpe wird dann bevorzugt so eingestellt, dass ein vorbestimmter Druck am Eintrag der Zahnradpumpe ansteht, so dass die Zahnradpumpe nahezu vollständig mit Produkt gefüllt ist. Gleichzeitig kann die Drehzahl des Mischelements so eingestellt werden, dass der Füllgrad resp. das Drehmoment gleich gehalten werden.

Das schneckenförmige Austragsorgan wird bevorzugt mit einer Drehzahl betrieben, so dass das vom Mischkneter übergebene Produkt sofort ohne Rückstau ausgetragen wird.

Das wird Additiv unter solchen Prozessbedingungen dosiert zugegeben, dass es verdampft, wodurch ein Kühleffekt entsteht, der die Produkttemperatur einstellt und das verdampfte Additiv als Schleppgas und zur Partialdruckabsenkung nutzt. Das Schleppgas wird dann entgegen der Fliessrichtung des Produktes geführt. Auch die Geschwindigkeit der Brüden (Schleppgas bzw. verdampftes Lösemittel) wird über den Querschnitt des Brüdendoms so beeinflusst, dass kein Produkt in den Brüdenweg gelangt.

In kontinuierlichen Verdampfungstrocknern wird üblicherweise die zu konzentrierende Lösung an einer Stelle eingeben und gravimetrisch oder mit geeigneten Massnahmen über eine beheizte Oberfläche gefördert, wo sie unter dem eingestellten Druck kocht und somit das Lösungsmittel entfernt wird. Die kontinuierliche Prozessführung entspricht idealer Weise der eines Strömungsrohrs, da die Verdampfungsrate vom Unterschied zwischen Siedepunkt und Heizflächenoberflächentemperatur (das treibende Gefälle) und Wärmeaustauschkoeffizient abhängt. Der Siedepunkt nimmt mit zunehmendem Feststoffgehalt zu, daher das treibende Gefälle ab.

Bei üblichen Trocknungen nimmt der Wärmeaustauschkoeffizient mit zunehmendem Feststoffgehalt ab, da die Viskosität mit zunehmendem Feststoffgehalt zunimmt und der Wärmeaustauschkoeffizient mit zunehmender Viskosität durch die behinderte Konvektion abnimmt. Wird Lösungsmittel von Feststofflösungen oder Suspensionen, insbesondere Polymerlösungen oder Suspensionen, insbesondere Elastomerlösungen oder Suspensionen, durch Verdampfen des Lösungsmittels entfernt, ist das Kochverhalten häufig umgedreht. Der Wärmeaustauschkoeffizient nimmt mit zunehmendem Feststoffgehalt ab einem kritischen Feststoffgehalt zu, da das Produkt stark schäumt und der Schaum die Wärmeaustauschfläche benetzt und damit den Wärmeaustausch behindert. Bei sehr verdünnten Lösungen ist der konvektive Transport der Blasen an die Gasoberfläche nicht behindert. Der Feststoffgehalt behindert diesen Blasentransport. Auch werden die Blasen als Schaum stabiler. Es ist daher notwendig die Blasen mechanisch zu zerstören.

Dies geschieht automatisch bei Feststoffgehalten über 30 bis 80 % mit einer genügenden vorhanden Mengen an konzentrierter Feststofflösung (hoher Hold up). In diesem Fall ist die Feststofflösung so viskos, dass sie die Kochblasen an die Gasoberfläche durch Mitschleppen transportiert. Dieser Wirkmechanismus funktioniert daher nur, wenn eine ausreichende Schleppströmung an die Oberfläche vorhanden ist. Die Kriterien der ausreichenden Schleppströmung sind in rotierenden Verdampfern zu der Oberflächenerneuerungsrate äquivalent.

Zusätzlich zur Kontaktwärme kann die Verdampfungsrate bei hohen Feststoffgehalten noch gesteigert werden, da durch die gesteigerte Viskosität das Drehmoment pro Volumeneinheit des Verdampfers und damit die mechanisch dissipierte Leistung der rotierenden Welle zunimmt. Verfahrenstechnisch entspricht die kontinuierliche Eindosierung einer verdünnten Lösung in einer konzentrierten Masse einer Rückmischung. Ein bekanntes Patent schlägt daher vor, die Lösung oder Suspension in einem grossvolumigen, selbstreinigenden rückgemischten Kneter zu verdampfen. Der hier eingesetzte Kneter besteht aus Scheiben oder Anker, die auf der Welle angebracht sind, die mit Knetbarren bestückt sind, die das Gehäuse und die eventuell vorhandene zweite Welle abreinigen bzw. statische Elemente für die gleiche Aufgabe der Wellenreinigung für einwellige Kneter. Die Scheiben oder Anker teilen den Produktraum in Mischzonen auf.

Grossvolumige, selbstreinigende Kneter erfüllen die Kriterien der hohen Oberflächenerneuerungsrate und des hohen Hold up's. Auch sind sie ausgelegt, hohe Viskositäten und Wellendrehmomente zu bewältigen. Ein weiterer Vorteil grossvolumiger, selbstreinigender Kneter ist, dass durch die offene Bauweise der Förderelemente, die sowohl im Gleichstrom und als auch Gegenstrom das Produkt fördern, eine gewisse Rückmischrate gewährleistet ist und sich das Produkt automatisch über die Länge auch für viskose Produkte gleichmässig verteilt. Der Füllgrad im Kneter lässt sich daher über die Zahnradpumpe bzw. das Austragsorgan steuern. Die erforderliche Rückmischung laut o.g. Patent soll über die Länge des Apparates und die Konfiguration der Knetelemente eingestellt werden. Dieses Patent beschreibt eine ähnliche Anwendung des grossvolumigen, selbstreinigenden Kneters für die Reaktion (Polymerisation) von Produkten, die mit zunehmendem Umsatzgrad viskos werden. Das Prinzip der Rückmischung wird hier vorteilhaft vorgeschlagen, da die Reaktion exothermisch ist und die kalten Edukte durch schon reagiertes Produkt auf Reaktionstemperatur aufgewärmt werden. Ein Teil der flüssigen Edukte verdampft und wird nach Kondensation dem Kneter wieder zugemischt, wobei der eingestellte Druck im Produktraum die Verdampfungstemperatur steuert und somit das Produkt vor Überhitzung schützt. Nimmt die Umsatzgradrate mit den Umsatzgrad zu, ist die Rückmischung ebenfalls von Vorteil. Ist eines dieser Verdampfungsprodukte flüchtiger als andere, wird die Rezeptur der Lösung durch die Verdampfung verändert, und die Rückmischung soll diesem entgegenwirken.

Für die Verdampfungskühlung gelten die gleichen oben genannten Kriterien, wie hoher Hold up und Oberflächenerneuerungsrate, und sind somit ähnlich. Die vorgeschlagene Rückmischung hat auch Nachteile. Da das Verweilzeitspektrum des Kneters breit sein muss, kann ein Teil des Produktes sehr lange im Produktraum verbleiben. Im Verdampfer muss daher sichergestellt werden, dass während dieses Zeitraumes das Produkt nicht thermisch oder chemisch geschädigt wird. Bei Produktwechsel muss entweder der Kneter komplett entleert und dann relativ zeitraubend wieder befüllt werden, oder man dosiert frisches Produkt auf die bestehende Charge und erhält relativ grosse Mengen von vermischtem Produkt zweier folgender Produktläufe. Bei Polymerisationen schlägt sich die breite Verweilzeitverteilung in einer breiten Molmassenverteilung nieder.

Der Produktraum des Kneters lässt sich als eine Reihe von hintereinandergeschalteten Mischzonen beschreiben. Ein Kneter benötigt eine gewisse Mindestzahl von Mischzonen, um die mechanische Belastung, die beim Eingriff der Knetelemente entsteht, zu verteilen und um eine gute Mischwirkung zu erzielen. Es hat sich allerdings in der Praxis herausgestellt, dass die Einteilung des Produktraumes in Mischzonen die Vermischung in Längsrichtung der Welle behindert. Dieses Verhalten des Knetraumes ist erwünscht, wenn der Kneter ein enges Verweilzeitspektrum aufweisen soll. Bei einer gewünschten grösstmöglichen Rückmischung ist dieses Verhalten unerwünscht.

Es ist versucht worden, das Mischverhalten in Längsrichtung durch Anpassung der Mischelementegeometrie zu verbessern. Dies hatte allerdings nur beschränkten Erfolg, da ein niedrigviskoses gut mischbares Produkt in eine viskose Masse eingemischt wird. Wird die Vermischung generell verbessert, verbessert sich sowohl die Einmischung der Feedlösung als auch die Vermischung in Längsrichtung, wobei die Vermischung in Längsrichtung der viskosen Masse immer ungünstiger bleibt, als die Einmischung der Feedlösung. Die Verweilzeitverteilung des Kneters lässt sich annäherungsweise als Kaskade von 100 % gerührten Mischkesseln beschreiben.

Theoretische Überlegungen wie auch praktische Versuche haben gezeigt, dass das Verweilzeitverhalten des eingesetzten Kneters mit Minimum 3 bis 7 gerührten Mischkesseln entsprechen kann. Rechnungen haben gezeigt, dass diese Anzahl von Mischkesseln in Serie für viele Anwendungen zu hoch ist, praktisch bei 1 bis 2 Kesseln liegen sollte. Die praktische Anzahl von Mischkesseln fluktuiert je nach Betriebsweise. Diese Fluktuationen führen zu unerwünschten Fluktuationen im Betrieb des Kneters.

Die Nachteile des beschriebenen Kneterverfahrens werden erfindungsgemäss dergestalt verbessert, dass die Feedlösung oder die rückkondensierte Lösung nicht an einer Stelle in den Kneter eingebracht wird, sondern über mehrere Feedstellen verteilt.

Der Abstand der Feedstellen wird erfindungsgemäss derart eingeteilt, dass jede Mischzone eine Feedstelle hat und ausreichend rückgemischt ist. In der Praxis sind 1 bis 3 Feedstellen pro 3 Mischzonen notwendig, um zu gewährleisten, dass insbesondere bei der Hauptverdampfung eine ausreichende Rückmischung vorhanden ist. Der Anteil an Feed für jede Feedstelle wird erfindungsgemäss entweder fest eingestellt oder als Funktion eines Parameters, der den Feststoffgehalt oder Umsatzgrad beschreibt, geregelt.

Die Durchsätze der Feedstellen können jeweils unabhängig von einander eingestellt werden. Dabei wird der Durchsatz der Feedstelle jeweils in Abhängigkeit von der Produkttemperatur in der Nähe der jeweiligen Feedstelle, aber nicht zwingend, eingestellt oder geregelt. Desweiteren kann der Druck in den Feedleitungen so eingestellt werden, dass keine Verdampfung in den Feedleitungen stattfindet.

Die erfindungsgemässe Fahrweise hat den Vorteil, dass die Verweilzeitverteilung stabiler ist und das Produkt besser ausgetauscht wird. Bei Produkten mit hoher Knetenergie pro Massenstrom Feststoff ist eine Feedstelle im hinteren Teil des Produktraumes erfindungsgemäss besonders günstig, da das verdampfte Lösungsmittel einen Kühleffekt hat und somit das Produkt nicht überhitzt.

Erfindungsgemäss hat die Wahl mehrerer Feedstellen ausserdem den Vorteil, dass mehrere rückgemischte Arbeitspunkte gefahren werden können. So ist es möglich im vorderen Teil des Verdampfers effizient Kontaktwärme bei 30 bis 60 % Feststoffanteil mit noch relativ geringer Viskosität zu fahren, die aber ausreichend ist, den Schaum mechanisch zu zerstören. Im hinteren Teil des Apparates hingegen kann ein Feststoffgehalt von 80 bis 98 % eingestellt werden. Damit wird die Verdampfungsleistung erhöht, da sowohl mechanische Dissipation wie auch Kontaktwärme genutzt wird.

Auch kann durch Einstellung der Länge, wo die Viskosität niedriger sein soll, der Füllgrad des Kneters angehoben werden, was den Austrag des Kneters erheblich erleichtert.

Die Kontrolle des Feststoffgehaltes lässt sich erfindungsgemäss durch Temperaturmessungen überwachen. Der Gesamtfüllgrad wird mit Hilfe des Drehmoments der Welle erfasst. Im Falle des Knetreaktors kann der Umsatzgrad durch Probennahme über die Länge des Kneters erfasst werden. Diese Proben zeigen dann auch an, ob die Rezeptur bei mehreren Edukten korrekt ist, so dass die verdampften Komponenten in richtiger Komposition ersetzt werden.

Die Rezeptur kann erfindungsgemäss im Zulauf zur Feedstelle angepasst werden. Die Brüden werden vom Eindampfkneter oder Knetreaktor entweder durch eine Schnecke, die in Gegenrichtung des Gasstromes fördert, oder durch einen Brüdendom abgeführt. Sollte doch Schaum entstehen, wird dieser in der Schnecke mechanisch zerkleinert oder erfindungsgemäss durch einen Gasstrom entlang der Behälterwand des Brüdendomes zurück in den Produktraum geblasen und dabei mechanisch zerkleinert.

Bei einem weiteren Ausführungsbeispiel der Erfindung soll die Temperatur des Produktes am Austrag über die Drehzahl des Mischkneters bei gegebener Produktzufuhr geregelt werden. Ebenso kann die Temperatur des Produkts im Produktraum durch die Menge der Produktzufuhr bei gegebener Drehzahl und/oder die Drehzahl des Mischkneters durch die Menge der Produktzufuhr bei gegebener Produkttemperatur geregelt werden.

### Figurenbeschreibung

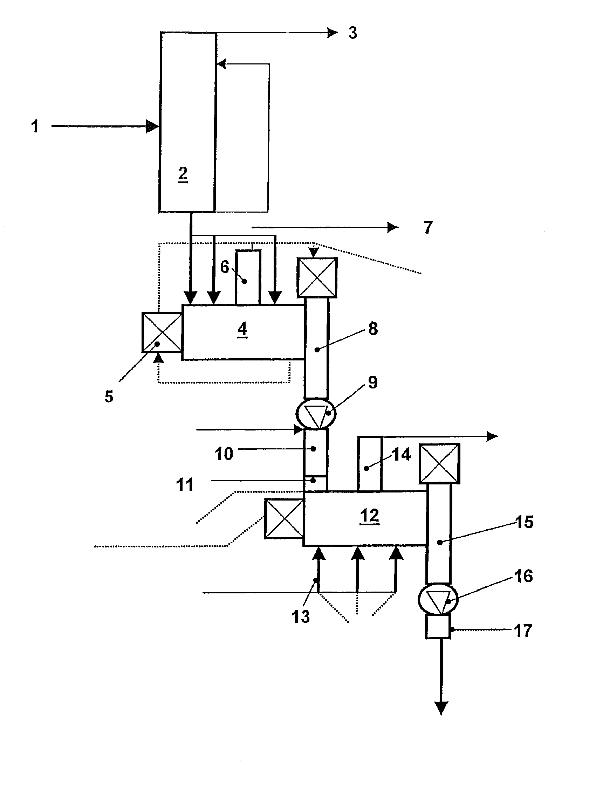

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine blockschaltbildliche Darstellung eines Verfahrensaufbaus einer erfindungsgemässen mehrstufigen Anlage zur kontinuierlichen thermischen Trennung von Stoffgemischen, insbesondere zur Behandlung von Polymerlösungen.

Eine beliebige Polymerlösung 1 wird als erstes einem Verdampfer 2 zugeführt. Bei diesem Verdampfer 2 kann es sich bspw. um eine Verdampfungsrohrschleife handeln. In dem Verdampfer 2 findet eine Vorkonzentration statt. Die dünnflüssige, meistens direkt aus der Lösungsmittelpolymerisation stammende Polymerlösung mit ca. 5 bis 50% Polymergehalt wird durch eine thermische Behandlung auf etwa 20 bis 80% aufkonzentriert. Die verdampften, flüchtigen Bestandteile (Brüden) werden aus dem Verdampfer abgezogen und einem Kondensator 3 zugeführt.

Die aufkonzentrierte Polymerlösung gelangt dann aus dem Verdampfer 2 in einen Verdampfungskneter 4. Dabei handelt es sich bevorzugt um einen horizontalen Mischkneter mit einem oder mehreren horizontal angeordneten Knetwellen, an denen sich entsprechende Knetelemente befinden. Diesen Knetwellen ist ein Antrieb 5 zugeordnet.

Die aufkonzentrierte Polymerlösung kann an einer oder mehreren Stellen nacheinander oder gleichzeitig eindosiert werden. Dabei soll die Dosiermenge der Polymerlösung jeweils durch eine vorgegebene Produkttemperatur gesteuert werden.

Dem Verdampfungskneter 4 sitzt wiederum ein Brüdendom 6 zum Abzug der leicht flüchtigen Bestandteile auf, die wiederum in einem Kondensator 7 kondensiert und ausgetragen werden können.

Die jetzt im Verdampfungskneter 4 aufkonzentrierte Polymerlösung wird über einen Polymeraustrag 8 kontinuierlich ausgetragen. Dabei soll die aus dem Verdampfungskneter 4 ausgetragene Polymerlösung durch einen Druckaufbau, vorzugsweise durch eine Zahnradpumpe 9, auf einen Druck von mehr als 0 bar, bevorzugt 1 bis 10 bar gebracht werden. In die unter Druck stehende Polymerlösung wird nun, falls erforderlich, ein flüssiges oder gasförmiges Additiv eindosiert und in einem Mischrohr 10, einem statischen oder dynamischen Mischer möglichst homogen in die Polymerlösung eingemischt. Diese Mischung wird dann im vorliegenden Ausführungsbeispiel durch eine Düsenplatte 11 in einen nachgeschalteten Entgasungskneter 12 zur Entgasung entspannt, wobei durch eine schlagartige Verdampfung der flüchtigen Bestandteile und der Additive eine Erhöhung der Partikeloberfläche stattfindet. Dies geschieht analog dem sogenannten Popkorneffekt.

In dem Entgasungskneter entsteht eine Propfenströmung für die Polymerlösung, wobei diese einer stetigen aktiven Oberflächenerneuerung unterliegt und dabei mechanische Dissipationsenergie in der Polymerlösung absorbiert wird.

Während der Entgasung wird die Polymerlösungstemperatur im Entgasungskneter durch die Zugabe von leicht verdampfbaren, in der Polymerlösung nicht löslichen Additiven an einer oder mehreren Stellen im Entgasungskneter unterhalb der Polymerschädigungstemperatur gehalten. Dies ist durch die Pfeile 13 dargestellt. Das Ganze wird über Temperaturmessinstrumente kontrolliert, über die auch die entsprechend dosierte Additivmenge für die Verdampfungskühlung geregelt wird.

Auf dem Entgasungskneter 12 sitzt ein weiterer Brüdendom 14 auf, über den wiederum leicht flüchtige Bestandteile aus dem Entgasungskneter ausgetragen werden.

An den Entgasungskneter 12 schliesst ein weiterer Polymeraustrag 15 an, wobei die nunmehr fertige Polymermasse durch einen weiteren Druckaufbau, vorzugsweise durch eine weitere Zahnradpumpe 16, auf einen Druck von mehr als 0 bar, bevorzugt mehr als 10 bar gebracht wird.

Diese Polymermasse gelangt dann in eine Schneidevorrichtung 17, in der sie vorzugsweise granuliert oder auf eine sonstige gewünschte Form gebracht wird. Dieses Granulat wird dann ausgetragen.

**Bezugszeichenliste**

| | | | | | |
|---|---|---|---|---|---|
| 1 | Polymerlösung | 34 | | 67 | |
| 2 | Verdampfer | 35 | | 68 | |
| 3 | Kondensator | 36 | | 69 | |
| 4 | Verdampfungskneter | 37 | | 70 | |
| 5 | Antrieb | 38 | | 71 | |
| 6 | Brüdendom | 39 | | 72 | |
| 7 | Kondensator | 40 | | 73 | |
| 8 | Polymeraustrag | 41 | | 74 | |
| 9 | Zahnradpumpe | 42 | | 75 | |
| 10 | Mischrohr | 43 | | 76 | |
| 11 | Düsenplatte | 44 | | 77 | |
| 12 | Entgasunqskneter | 45 | | 78 | |
| 13 | Pfeil | 46 | | 79 | |
| 14 | Brüdendom | 47 | | | |
| 15 | Austrag | 48 | | | |
| 16 | Zahnradpumpe | 49 | | | |
| 17 | Schneidevorrichtung | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur kontinuierlichen Behandlung eines zähviskosen, pastösen Produktes in einem Mischkneter mit einem durchgängigen Produkt- und Gasraum, **dadurch gekennzeichnet, dass** die Temperatur des Produktes am Austrag über die Drehzahl des Mischkneters bei gegebener Produktzufuhr geregelt wird.

2. Verfahren zur kontinuierlichen Behandlung eines zähviskosen, pastösen Produktes in einem Mischkneter mit einem durchgängigen Produkt- und Gasraum, **dadurch gekennzeichnet, dass** die Temperatur des Produkts im Produktraum durch die Menge der Produktzufuhr bei gegebener Drehzahl geregelt wird.

3. Verfahren zur kontinuierlichen Behandlung eines zähviskosen, pastösen Produktes in einem Mischkneter mit einem durchgängigen Produkt- und Gasraum, **dadurch gekennzeichnet, dass** die Drehzahl des Mischkneters durch die Menge der Produktzufuhr bei gegebener Produkttemperatur geregelt wird.

4. Verfahren zur kontinuierlichen Behandlung eines zähviskosen, pastösen Produktes in einem Mischkneter mit einem durchgängigen Produkt- und Gasraum, **dadurch gekennzeichnet, dass** die Temperatur des Produktes im Produktraum durch den absoluten Raumdruck geregelt wird.

5. Verfahren zur kontinuierlichen Behandlung eines zähviskosen, pastösen Produktes in einem Mischkneter mit einem durchgängigen Produkt- und Gasraum, **dadurch gekennzeichnet, dass** die eingetragene mechanische Energie durch die Menge der Produktabfuhr aus dem Mischkneter geregelt wird, um die Produkttemperatur in einem vorgegebenen Fenster zu halten.
